Europäisches Patentamt

European Patent Office

Office européen des brevets

(19)

(11) Numéro de publication: **0 152 343**

**A2**

(12)

# DEMANDE DE BREVET EUROPEEN

(21) Numéro de dépôt: 85400186.4

(22) Date de dépôt: 05.02.85

(51) Int. Cl.⁴: **B 60 G 7/02**
B 60 G 15/06, B 60 G 21/04

(30) Priorité: 07.02.84 FR 8401809

(43) Date de publication de la demande:
21.08.85 Bulletin 85/34

(84) Etats contractants désignés:
AT CH DE GB IT LI NL SE

(71) Demandeur: REGIE NATIONALE DES USINES RENAULT
Boîte postale 103 8-10 avenue Emile Zola
F-92109 Boulogne-Billancourt(FR)

(72) Inventeur: Gallet, Patrick
6, Résidence Tournemine
F-91440 Bures Sur Yvette(FR)

(72) Inventeur: Trema, Daniel
31, rue du 15 Février
F-95870 Bezons(FR)

(74) Mandataire: Réal, Jacques et al,
Régie Nationale des Usines Renault SCE 0804
F-92109 Boulogne Billancourt Cedex(FR)

(54) Train arrière de véhicule automobile.

(57) Train arrière de véhicule automobile du type à bras tirés et à essieu souple.

La totalité des points de contact de ce dernier avec la caisse (7), à savoir, les parties supérieures du ressort (20) et de l'amortisseur (22), ainsi que la fixation du bras (21), est située sous le plancher et plus particulièrement sous celui du coffre, et simultanément sensiblement dans un même plan vertical.

Application aux suspensions de véhicules automobiles.

FIG.3

Croydon Printing Company Ltd.

TRAIN ARRIERE DE VEHICULE AUTOMOBILE

La présente invention se rapporte à un train arrière de véhicule automobile du type à essieu souple et à bras tirés.

On connaît déjà les trains arrière de ce genre, comportant deux bras tirés reliés transversalement par un profilé faisant fonction d'essieu, la suspension étant constituée par exemple d'un ressort hélicoïdal centré sur un amortisseur vertical.

Cette structure implique la présence d'une chapelle coiffant l'amortisseur et le ressort sur laquelle ils prennent appui. Celle-ci est solidarisée à la caisse et plus précisément au niveau du coffre dont elle diminue d'autant le volume. De plus, cette chapelle en tôle doit être rigide pour tenir les efforts de suspension ; elle est donc lourde et implique de surcroît des renforts de caisse à chaque point de fixation du train sur celle-ci.

La présente invention a pour but d'alléger considérablement la structure porteuse, en supprimant ladite chapelle et en limitant notablement la surface de la caisse à renforcer.

L'invention sera décrite au regard des figures 1 à 3 ci-jointes, données à titre d'exemple non limitatif, et qui se rapportent respectivement :

- la figure 1, à une coupe selon un plan vertical situé au niveau d'un train arrière selon l'état de la technique ;

- la figure 2, à une coupe analogue d'un train arrière selon l'invention ;

- la figure 3, à une vue en perspective d'une partie du train de l'invention.

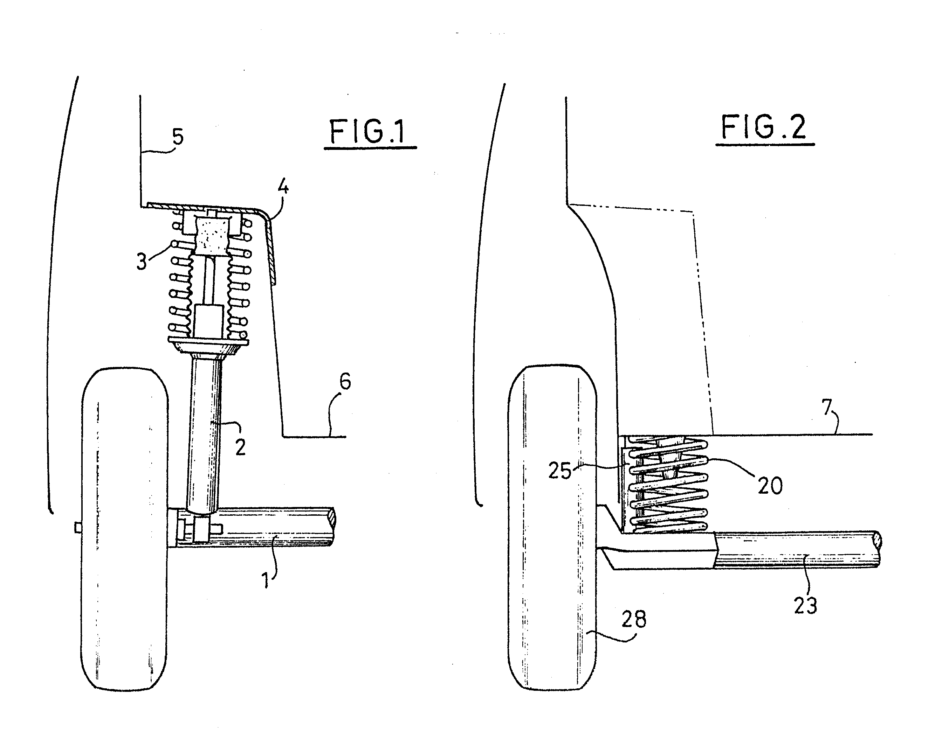

La suspension de la figure 1, antérieurement utilisée, est essentiellement constituée d'un essieu 1 aux extrémités duquel sont articulées des jambes de force comportant un amortisseur 2 au sommet duquel, de façon concentrique, agit un ressort 3 en compression.

La partie supérieure de la jambe de force 2 est logée dans une chapelle 4 qui renforce la caisse 5 en cet endroit insuffisamment résistant .

On constate que le volume nécessaire à la jambe de force est pris sur celui du coffre 6 qui en est donc diminué d'autant.

Le train arrière selon l'invention est bien visible aux figures 1 et 2.

Contrairement à la représentation précédente, la totalité des points de contact du train avec la caisse 7 est située sous le plancher du véhicule et particulièrement sous celui du coffre. De plus, ces derniers constituant les différents lieux d'entrée d'efforts sur la caisse : partie supérieure du ressort 20, fixation du bras 21 et de l'amortisseur 22, sont situés sensiblement dans un même plan vertical ; de ce fait, les efforts dynamiques de suspension sont regroupés et le renforcement éventuel de la caisse est exclusivement localisé à ces points, par exemple à l'aide d'une bande de tôle de forme simplifiée et de surface limitée ; la structure de la caisse à cet endroit est par conséquent simplifiée et plus légère ; on notera dans ces conditions l'élimination de la chapelle , ce qui constitue un gain de poids et de place dans le volume du coffre.

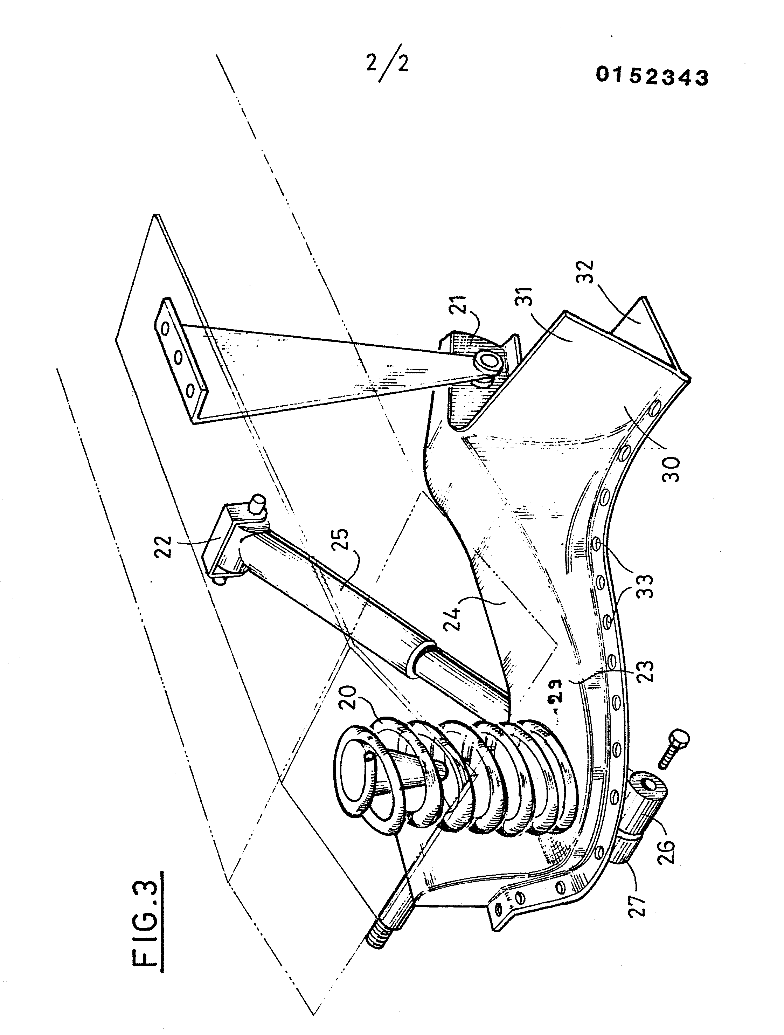

Le bras tiré 23 (figure 3) n'est pas droit, mais forme une courbe 24 permettant le passage de l'amortisseur 25, très incliné sur l'horizontale, dont la partie basse 26 est fixée dans le prolongement inférieur 27 dudit bras 23, le plus près possible de la roue 28 ; cette dernière propriété est délibérément recherchée, pour diminuer les efforts et couples antagonistes roue-amortisseur pour accroître la rigidité du train, diminuer son encombrement et regrouper ses composantes 20-25. Pour les mêmes raisons, on constate la proximité de la base du ressort 20 par rapport à la roue 28, du fait de la courbure 24 du bras qui détermine son assise 29.

Les bras 23 et l'essieu souple 30 sont constitués par la superposition de deux coquilles 31 - 32, chacune d'elles déterminant en une seule pièce à la fois la forme des deux bras tirés 23 et de l'essieu souple 30 au niveau duquel les deux coquilles 31 - 32 constituent un profil de section angulaire aigüe. Les coquilles 31 - 32 sont obtenues par emboutissage et sont soudées entre elles par des points 33, constituant alors en une pièce unique les deux bras 23 et le profil de torsion 30.

Antérieurement, on réalisait un ensemble analogue par assemblage des deux bras, d'un profil médian et de pièces de liaisons, ces différents composants étant généralement réunis par soudure à l'arc.

Par rapport à cet état de la technique, le train arrière selon l'invention présente les avantages suivants :

- élimination des pièces de liaisons ; donc gain de poids et de coûts ;

- absence des surcontraintes locales dues aux liaisons par soudure à l'arc ;

- rigidité de flexion du profil supérieure, à rigidité de torsion égale, et donc meilleur guidage des roues ;

- meilleures caractéristiques géométriques du train, du fait de la moindre dispersion des dimensions lors de la fabrication de l'unique pièce emboutie qui réalise l'ensemble bras - essieu ;

- possibilité  de faire varier facilement les caractéristiques de flexion du profil en modulant en conséquence sa section sur la longueur de l'essieu.

REVENDICATIONS

1. Train arrière de véhicule automobile du type à bras tirés et à essieu souple, caractérisé par le fait que la totalité des points de contact du train avec la caisse (7), à savoir, les parties supérieures du ressort (20) et de l'amortisseur (22), ainsi que la fixation du bras (21), est située sous le plancher et plus particulièrement sous celui du coffre, et simultanément sensiblement dans un même plan vertical, regroupant ainsi les efforts dynamiques en provenance de la suspension, ce qui autorise de ce fait un renforcement éventuel de la caisse exclusivement localisés à cet endroit, notamment à l'aide d'une bande de tôle de forme simplifiée et de surface limitée.

2. Train arrière de véhicule selon la revendication 1, caractérisé en ce que les bras tirés (23) et l'essieu souple (30) sont constitués par la superposition de deux coquilles (31 - 32), chacune d'elles déterminant en une seule pièce à la fois les deux bras tirés (23) et l'essieu souple (30), au niveau duquel lesdites coquilles (31 - 32) constituent un profil de section angulaire aigüe, les coquilles (31 - 32) étant solidarisées par soudure par points (33).

FIG.1

FIG.2

FIG.3